# EUROPEAN PATENT SPECIFICATION

(11) **EP 4 538 587 B1**
(45) Date of publication and mention of the grant of the patent: **28.10.2026**
(21) Application number: 25160450.0
(22) Date of filing: 17.07.2020
(51) Int. Cl.: F17C 13/04

(54) **DIFFERENTIAL PRESSURE OPENING AND EXCESS FLOW CLOSING VALVE FOR GAS CYLINDER**
DIFFERENZDRUCKÖFFNUNGS- UND ÜBERDRUCKSCHLIESSENDES VENTIL FÜR EINE GASFLASCHE
OUVERTURE DE PRESSION DIFFÉRENTIELLE ET SOUPAPE DE FERMETURE D'UN ÉCOULEMENT EN EXCÈS POUR BOUTEILLE À GAZ

(30) Priority: 26.07.2019 LU 101328
(43) Date of publication of application: 16.04.2025
(62) Document number(s) of the earlier application(s) in accordance with Art. 76 EPC: 20742254.4 / 4 004 428
(73) Proprietor: ROTAREX S.A., 7759 Roost (Bissen) (LU)
(72) Inventor: SELLEN, Stephan, 66693 Wehingen (DE); SCHMITZ, Philippe, 7303 Steinsel (LU)
(74) Representative: Ipsilon Luxembourg

(56) References cited:
- JP-A- 2007 278 484
- US-A- 3 844 312
- US-A- 4 077 422
- US-A1- 2008 196 772
- US-A1- 2015 192 213

## Description

### Technical field

The invention is directed to the field of valves for fluid, in particular for compressed gas, more particularly for industrial compressed gas and for being mounted on gas cylinders.

### Background art

Prior art patent document published US 3,844,312 discloses a valve for a fluid, for instance for liquefied petroleum gas tanks. The valve comprises a body that houses a shut-off device comprising a main seat and a pilot seat, for achieving a slow opening and an automatic closing in case of excess flow rate. The shut-off device comprises a main seat, a main closure element with a central passage for the fluid and a pilot seat, and a pilot closing element normally resting on said pilot seat. A first compression spring is operably mounted between the main closing element and the pilot closing element, and a second compression spring, concentric inside the first one, operatively mounted between the valve body and the pilot closing element. A cam device is provided for actuating the pilot closing element by moving said element away from the pilot seat, opening the passage and building up a counter-pressure downstream of the shut-off device. Once the pressure difference (i.e. pressure upstream minus pressure downstream) become less than the force exerted by the first compression spring, the main closing element moves away from the main seat and opens in full the passage. In the event that piping downstream of the valve experiences a break, the counter-pressure will become lower such that the above pressure difference will become greater than the force of the first compression spring, so that the main closing element will contact the main seat and close the main passage. The pilot passage will also close further to the engagement of an enlarged-diameter plug portion of the stem of the pilot closing element with a corresponding orifice in the pilot closing element.

The above teaching is interesting in that it provides on one side a slow-opening of the passage and on the other side an automatic closing of said passage in case of a too high flow rate or a loss of counter pressure. The construction of the valve is however bulky, in particular radially, and therefore not quite practicable for industrial compressed gas, i.e. at about 200 bars and on gas cylinder with a neck that shows a limited diameter.

Patent documents published US 2010/0252770 A1 and US 2016/0097444 A1 disclose similar valves for fluid with a main closing element and a pilot closing element.

### Summary of invention

### Technical Problem

The invention has for technical problem to overcome at least one of the drawbacks of the above cited prior art. More specifically, the invention has for technical problem to provide a valve with a controlled opening function and/or automatic closing function in case of excess flow specially adapted for industrial compressed gas, i.e. for gas cylinders.

### Technical solution

According to a first aspect, there is disclosed a valve for a fluid, in particular for compressed gas, comprising a body with an inlet, an outlet and a passage fluidly interconnecting the inlet and outlet; a shut-off device housed in the body and configured for selectively opening and closing the passage, the shut-off device comprising a main seat, a main closing element configured for cooperating with the main seat and forming a channel extending there through and a pilot seat, a pilot closing element housed in the main closing element and configured for cooperating with the pilot seat, a first compression spring operatively mounted between the pilot closing element and the main closing element, and a second compression spring configured for biasing the main closing element towards the main seat; an actuating device configured for moving the pilot closing element away from the pilot seat and open the passage through the channel and, once a counter-pressure has built up downstream of the main closing element, move the main closing element away from the main seat; wherein the second spring is operatively mounted between the main closing element and the body and in a shut-off state of the shut-off device, the first compression spring is stronger than the second compression spring.

When defining the compression springs as operatively mounted between two elements, it is to be understood that the compression spring acts directly on the two elements.

According to a preferred embodiment, the second compression spring surrounds the main closing element.

According to a preferred embodiment, the main closing element shows an outer cylindrical surface housed in a sliding fashion in at least one bore of the body, the outer cylindrical surface showing a least one longitudinal cut-out forming the passage along the main closing element.

According to a preferred embodiment, each of the least one longitudinal cut-out forms a flattened surface.

According to a preferred embodiment, the least one longitudinal cut-out comprises at least three cut-outs distributed around the main closing element on the outer cylindrical surface.

According to a preferred embodiment, the outer cylindrical surface of the main closing element comprises, relative the main seat, a distal portion housed in a distal bore of the body, with a first diameter, and a proximal portion housed in a proximal bore of the body, with a second diameter greater than the first diameter.

According to a preferred embodiment, the outer cylindrical surface of the main closing element forms a shoulder between the distal portion and the proximal portion, the second compression spring resting on said shoulder.

According to a preferred embodiment, the main seat is formed on a cylindrical element that is housed in a cavity formed in the body, said cylindrical element comprising a through-hole forming the passage.

According to a preferred embodiment, the cylindrical element comprises an outer thread engaged with an inner thread of the cavity, the cylindrical element comprising a front face opposed to the main seat and provided, at an outer periphery, with prongs for engaging with a tool for screwing the cylindrical element in the cavity.

According to a preferred embodiment, the proximal bore is formed in the cylindrical element.

According to a preferred embodiment, the main seat is a conical surface adjacent the proximal bore.

According to a preferred embodiment, the channel in the main closing element comprises a bore distal to the main seat and a through-hole proximal to the main seat, the pilot closing element being elongate with a distal portion, a proximal portion and a collar portion between the distal and proximal portions, the collar portion being housed in a sliding fashion in the bore and the proximal portion extending through the through-hole.

According to a preferred embodiment, the first compression spring is slid around the distal portion of the pilot closing element and rests on the collar portion.

According to a preferred embodiment, the pilot seat is formed by a cylindrical block of non-metallic material that is inserted into the bore of the main closing element.

According to a preferred embodiment, the first compression spring is operatively mounted on the main closing element by resting on a pin that is inserted transversally into the main closing element.

According to a preferred embodiment, the main closing element comprises a conical front surface with a groove housing a gasket configured for cooperating with the main seat. The gasket can an elastomer vulcanized in said groove.

According to a preferred embodiment, the main closing element comprises a rear face distal to the main seat, configured for abutting against a circular shoulder in the body when the main closing element is away from the main seat, the rear face showing at least one transversal cut-out forming the passage at the circular shoulder when said rear face abuts against the circular shoulder.

According to a preferred embodiment, the pilot closing element freely protrudes out of the main closing element when the shut-off device in a closed state, the actuating device being configured for contacting and moving the pilot closing element without contacting the main closing element. Freely protruding out of the main closing element means that no guiding means fixed with the body is provided.

According to a second aspect, there is disclosed a valve for a fluid, in particular for compressed gas, comprising a body with an inlet, an outlet and a passage fluidly interconnecting the inlet and outlet; a shut-off device housed in the body and configured for selectively opening and closing the passage, the shut-off device comprising a main seat, a main closing element configured for cooperating with the main seat, forming a channel extending there through and a pilot seat, a pilot closing element housed in the main closing element and configured for cooperating with the pilot seat; an actuating device configured for moving the pilot closing element away from the pilot seat and open the passage through the channel and, once a counter-pressure has built up downstream of the main closing element,move the main closing element away from the main seat; wherein the main closing element shows an outer cylindrical surface housed in a sliding fashion in at least one bore of the body, the outer cylindrical surface showing a least one longitudinal cut-out forming the passage between the inlet and the shut-off device. The second aspect relates to the claimed invention.

The above features of the preferred embodiments of the first aspect are herewith also disclosed in combination with the second aspect.

More specifically, the shut-off device can comprise a single compression spring. Also the actuating device can comprise an elastic system through which the actuating force is transmitted and be configured for contacting also the main closing element for moving said element.

Alternatively, the shut-off device can comprise a first compression spring operatively mounted between the pilot closing element and the main closing element, and a second compression spring configured for biasing the main closing element towards the main seat.

### Advantages of the invention

The invention is particularly interesting in that it provides solutions for rendering the valve compact and suitable for gas compressed at high pressures, i.e. at least 200 bar, and for being mounted on a gas cylinder. Both the first and second aspects solve that particular problem. In the above cited prior art US 3,844,312, the shut-off device is particularly bulky radially. Thanks to the invention, according to both first and second aspects, the shut-off device can be designed much more compact, in particular radially.

### Brief description of the drawings

Figure 1 is a sectional view of a valve according to the invention, a closed state.
Figure 2 is an enlarged view of the shut-off device of the valve of figure 1.
Figures 3 and 4 are two perspective views of the main closing element of the shut-off device of the valve of figures 1 and 2.
Figure 5 is a sectional view of the valve of figures 1 and 2 however in a partly opened state.
Figure 6 is an enlarged view of the shut-off device of the valve of figure 5.
Figure 7 is a sectional view of the valve of figures 1, 2, 5 and 6 however in a totally opened state.
Figure 8 is an enlarged view of the shut-off device of the valve of figure 7.

### Description of an embodiment

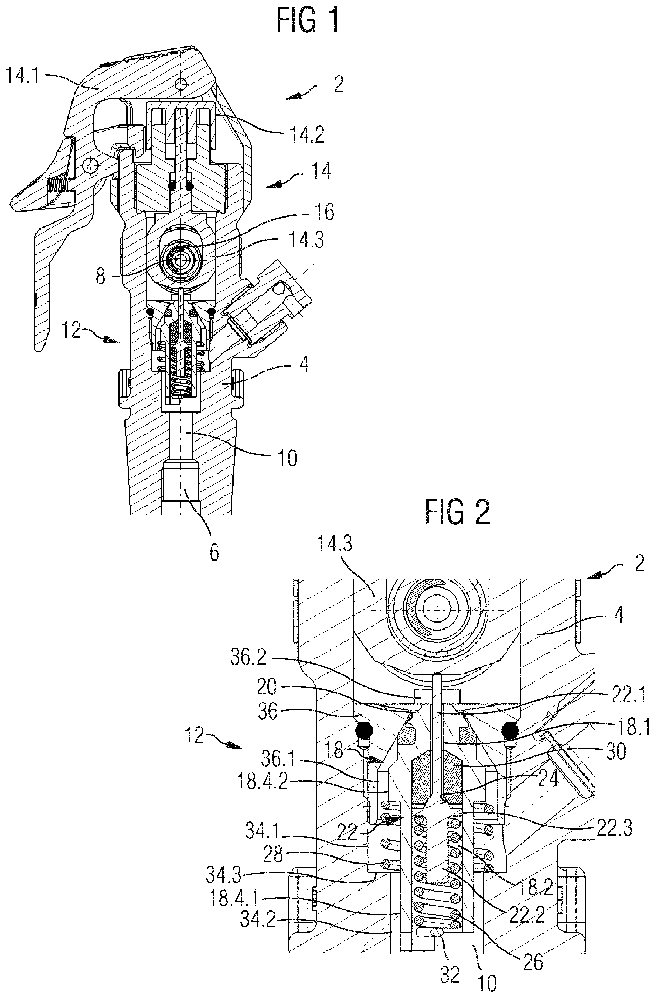

Figures 1 and 2 are sectional views of a valve according to the invention, in a closed stated.

Figure 1 is a complete view of the valve.

The valve 2 comprises a body 4 with a gas inlet 6, a gas outlet 8 and a gas passage 10 interconnecting said inlet with said outlet. The gas outlet 8 is not well visible for it extends perpendicularly to the plane of the section. The body 4 is advantageously made of metal like steel, stainless steel or brass. The body 4 shows at its lower end, at the gas inlet 6, a tapering male thread designed for engaging with a female thread on a neck of gas cylinder.

The valve 2 comprises also a shut-off device 12 housed in the body 4 and configured for selectively opening or closing the gas passage 10. The shut-off device is operated by an actuating device 14. For instance, the actuating device 14 comprises a pivoting lever 14.1 with a cam, a tappet 14.2 moving axially along the longitudinal axis of the valve for converting with the cam the pivoting movement of the lever 14.1 into a translation, and a push rod 14.3. For instance, the push-rod shows a lower enlarged portion that is slidably received in a longitudinal central cavity of the body 4. That enlarged portion shows an opening that is crossed by a residual pressure valve 16. Such a valve is optional. It can comprise a tubular portion forming a cartridge housing a piston urged by a spring and that cooperates with a seat formed for instance on the body. **The** opening in the enlarged portion of the push rod is designed, for instance oblong, for allowing a translation movement along the longitudinal axis without interfering with the residual pressure valve 16.

Figure 2 is an enlarged view of the shut-off device 12 of the valve in figure 1.

The shut-off device 12 comprises essentially, a main closing element 18 cooperating with a main seat 20, a pilot closing element 22 cooperating with a pilot seat 24 formed on the main closing element 18, a first compression spring operatively mounted between the main closing element 18 and the pilot closing element 22, and a second compression spring 28 operatively mounted between the main closing element 18 and the body 4.

More specifically, the main closing element 18 forms a central channel 18.1 and 18.2 extending through said element, the pilot closing element 22 being configured for closing that channel under the resilient force of the first compression spring 26. The channel in the main closing element 18 comprises a through-hole 18.1 that is proximal to the main seat 20 and a bore that is distal to the main seat 20. The pilot closing element 22 comprises a proximal portion 22.1 of a reduced diameter extending through the through-hole 18.1, a distal portion 22.2 located in the bore 18.2 and a collar portion 22.3 located between the proximal and distal portions and housed in a sliding fashion in the bore 18.2. The pilot seat 24 is formed for instance by a conical surface in a cylindrical block 30 made of a material that is softer than metal, e.g. a non-metallic material. The pilot closing element 22 comprises a corresponding conical surface at the junction between the pin-shaped proximal portion 22.1 and the collar portion 22.3 for contacting the conical surface of the pilot seat 24. As this is apparent, the bore 18.2 in the distal portion of the main closing element 18 shows a constant diameter so that the cylindrical block 30 forming the pilot seat 24 can be inserted into said bore. It can be press-fitted so that it remains in position without further measure or action.

The first compression spring 26, at one end, engages around the distal portion 22.2 of the pilot closing element 22 and abuts against the collar portion 22.3 thereof. The other end of the first compression spring 26 abuts against a pin 32 that is inserted transversally into the main closing element 18.

In the closed state as illustrated in figure 1, the first compressing spring 26 urges the pilot closing element 22 against the pilot seat 24 so as to close the channel 18.1 and 18.2 formed in the main closing element 18. Also the second compression spring 28 urges the main closing element 18 against the main seat 20. The gas passage 10 is therefore closed. The inlet pressure acting on the main closing element 18 and on the pilot closing element 22 upstream of the main and pilot seats 20 and 24, respectively, urges these elements against their seats and therefore further tends to close the passage. That pressure can be of several hundred bar.

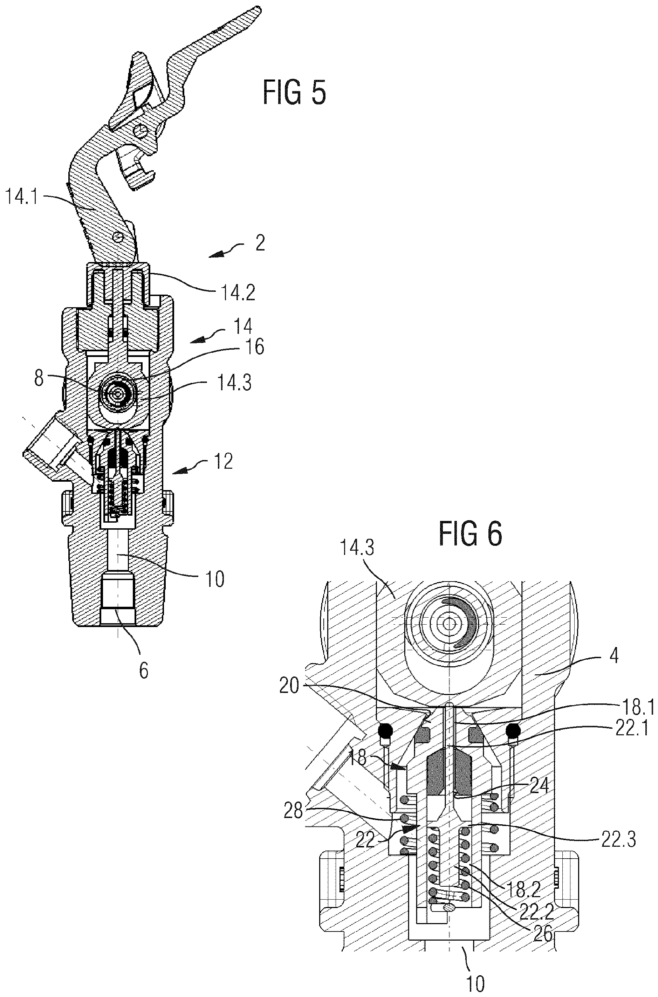

As this is apparent in figure 2, the pin-shaped proximal portion 22.1 of the pilot closing element 22 protrudes out of the main closing element 18 and is in contact or at least in vis-à-vis of the push rod 14.3 of the actuating device 14. Upon operation of the actuating device, the push rod 14.3 will be moved, for instance lowered, so as to move the pilot closing element 22 away from the pilot seat 24 and open the gas passage through the channel 18.1 and 18.2 in the main closing element 18. During that movement, the first compression spring 26 will be further compressed and transmit a force to the main closing element 18 tending to move it away from its seat 20. The force resulting from the inlet pressure on the main closing element 18, as mentioned here above, and added to the force of the second compression spring 28 is however greater than that resilient force. However, once gas flows through the channel 18.1 and 18.2, a counter-pressure on the downstream side of the main closing element 18 will build up with downstream connected equipment. The resulting force on the main closing element 18, originating from the gas pressure, will be reduced until the sum of that resulting force and the force of the second compression spring 28 is lower than the resilient force of the first compression spring 26. From that moment, the main closing element 18 will move away from the main seat 20 and fully open the gas passage 10. This will be detailed in connection with figures 5 to 8.

The above means that if the valve's outlet 8 is not connected to a downstream equipment, no counter pressure is built up and the main closing element 18 remains in contact with the main seat 20 until the cylinder pressure reaches a very low value, removing the risk of cylinder tipping over by a sudden and strong gas flow out of the outlet 8.

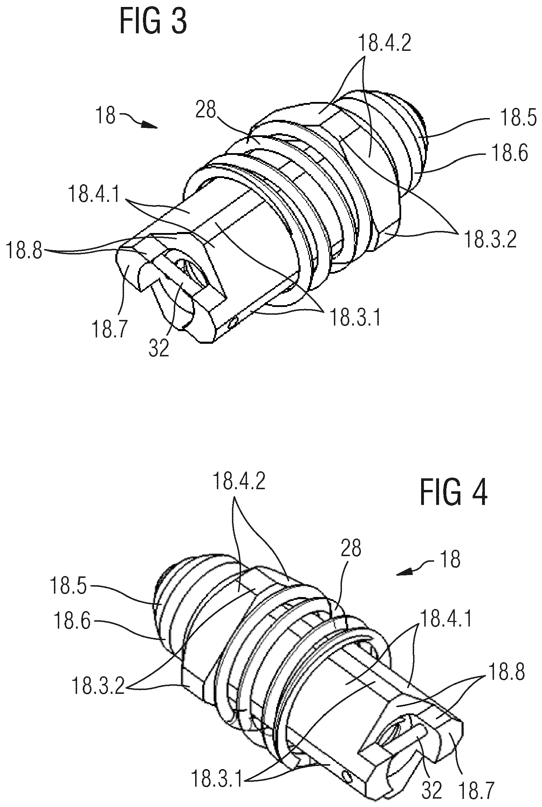

Figures 3 and 4 are two perspective views of the main closing element 18 of the shut-off device 12 of the valve of figures 1 and 2. As this is apparent, the main closing element 18 shows a generally cylindrical outer surface 18.3.1 and 18.3.2 to be received in a sliding fashion in at least one bore formed in the body. This generally cylindrical outer surface shows however cut-outs 18.4.1 and 18.4.2 that form passage for the gas between that outer surface and the at least one bore in the body. These cut-outs are for instance four flattened areas distributed around the main closing element 18. More specifically, the generally cylindrical outer surface comprises, relative to the main seat, a distal portion 18.3.1 and a proximal portion 18.3.2 with a larger diameter. A shoulder is formed between these two portions, the second compression spring 28 resting on that shoulder.

The main closing element 18 comprises a front conical surface 18.5 with a circular groove receiving a gasket 18.6 that can be vulcanised in said groove. The main closing element 18 comprises a rear face 18.7 that is generally perpendicular to the longitudinal axis of the main closing element 18 and showing at least one transversal cut-out 18.8, for instance two cut-outs. The rear face 18.7 is intended to abut against a shoulder formed in the body when in a fully opened position, and the cut-outs 18.8 form the gas passage in that position.

Back to figure 2, the body 4 shows a first bore 34.1 and a second bore 34.2 with a diameter that is less the diameter of the first bore 34.1. The distal portion 18.3.1 (not visible in figure 2 but well in figures 3 and 4) of the outer cylindrical surface of the main closing element 18 is slidably received in the second bore 34.2. The sectional view in figure 2 shows an important radial airgap because the section is made in the cut-outs 18.4.1, that airgap corresponding to the thickness of the cut-outs.

Still with reference to figure 2, the valve comprises a cylindrical element 36 mounted in the cavity of the body 4, for instance by screwing. That cylindrical element 36 forms the main seat 20 and forms also a bore 36.1 that is adjacent the main seat 20. The proximal portion 18.3.2 (not visible in figure 2 but well in figures 3 and 4) of the outer cylindrical surface of the main closing element 18 is slidably received in that bore 36.1. Similarly to the distal portion, the sectional view shows an important radial airgap because the section is made in the cut-outs 18.4.2, that airgap corresponding to the thickness of the cut-outs.

The cylindrical element 36 can comprise, on a front face that is opposite to the main seat 20 and at an outer periphery, prongs 36.2 for engaging with a tool for screwing the cylindrical element in the cavity.

Figures 5 and 6 are sectional views of a valve according to the invention, in a partly opened state.

Figure 5 is a complete view of the valve. As this is apparent, the section is still along the longitudinal axis but reversed. The lever 14.1 of the actuating device is lifted so that its cam presses the tappet 14.2 to a lower position and lowers the push rod 14.3 so as to move the pilot closing element off the pilot seat.

Figure 6 is an enlarged view of the shut-off device 12 of the valve in figure 5.

The pilot closing element 22 is moved down away from the pilot seat 24, thereby allowing the gas to flow at a reduced rate through the channel 18.2 and 18.1 of the main closing element 18. More specifically, the gas flows along the annular space between the distal portion 22.2 of the pilot closing element 22 and the bore 18.2 in the main closing element 18, along the first compression spring 26, thereafter between the collar portion 22.3 of the pilot closing element 22 and the bore 18.2 in the main closing element 18, and then between the pin-shaped proximal portion 22.1 of the pilot closing element 22 and the through-hole in the cylinder block 30 forming the pilot seat 24. The mechanical play between the outer surface of the collar portion 22.3 and the bore 18.2 can be dimensioned such that the resulting cross-section is less than the resulting cross-section downstream between the pin-shaped proximal portion 22.1 and the through-hole in the cylinder block 30. Preferably, the resulting cross-section between the collar portion 22.3 and the bore 18.2 is less than 20% of the resulting cross-section between the pin-shaped proximal portion 22.1 and the through-hole in the cylinder block 30. This allows, at the very beginning of the opening of the channel 18.1 and 18.2, the gas flowing with high speed between the collar portion 22.3 and the bore 18.2 to expand directly downstream of the collar portion 22.3 before passing through the cylinder block 30, thereby limiting the potential damages to said block.

In figure 6, the main closing element 18 is still in contact with the main seat 20 because the force of the push rod 14.3 transmitted by the first compression spring 26 is less than the opposite force being the sum of the force exerted by the second compression spring 28 and the force resulting of the gas pressure on the main closing element 18. However, the gas flowing at limited rate through the channel 18.2 and 18.1 allows a counter-pressure to build up on the downstream side of the main closing element 18 up to point where the sum of the force exerted by the second compression spring 28 and the force resulting of the gas pressure on both sides of the main closing element 18 becomes less than the opposite force of the first compression spring 26. In that situation, the main closing element 18 starts moving down and opening the passage between the main closing element 18 and the main seat 20.

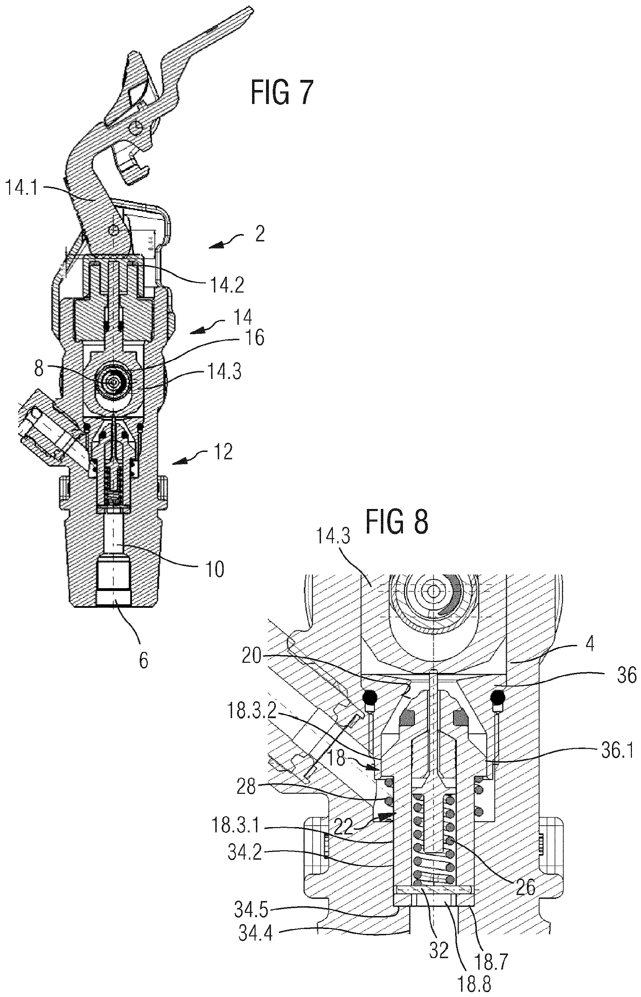

Figures 7 and 8 are sectional views of a valve according to the invention, in a totally opened state.

Figure 7 is a complete view of the valve. The actuating device 14 is in the same position as in figures 5 and 6.

Figure 8 is an enlarged view of the shut-off device 12 of the valve in figure 7.

The forces exerted on the main closing element 18 by the gas pressure tending to close the main closing element 18 are not sufficient anymore for compensating the opposite opening force exerted by the first compression spring 26, better said the difference between the force exerted by the first compression spring 26 and the force exerted by the second compression spring 28.

As this is apparent, the rear face 18.7 of the main closing element 18 abuts against a circular shoulder 34.5 formed in the body 4 between the second bore 34.2 and a third bore 34.4 of a lower diameter. With reference to figures 3 and 4 and the corresponding passage of the description, the transversal cut-outs 18.8 in the rear face 18.7 form the gas passage 10 at the circular shoulder 34.5. In that position of the main closing element 18, the force resulting of the gas pressure on both sides of the main closing element 18 is minimum. This means that the first and second compression springs 26 and 28 are dimensioned such that, in that position of the main closing element 18, the force exerted by the first compression spring 26 is greater than the sum of the force exerted by the second compression spring 28 and the force resulting of the gas pressure on both sides of the main closing element 18.

Important is to observe that in figure 7 and 8 the angular position of the main closing element 18 is different from the previous figures. The angular position of the main closing element 18 is such that the section plane crosses the cylindrical outer surfaces 18.3.1 and 18.3.2 (see also figures 3 and 4). In figure 8 we can observe that these surfaces 18.3.1 and 18.3.2 are guided by the bores 34.2 and 36.1. Also we can observe that the pin 32 (see also figures 3 and 4) extends in the plane of the section.

The embodiment of the invention which has been described here above is one non-limiting example, among many, of working the invention.

## Claims

1. Valve (2) for a fluid, in particular for compressed gas, comprising:
- a body (4) with an inlet (6), an outlet (8) and a passage (10) fluidly interconnecting the inlet (6) and outlet (8);
- a shut-off device (12) housed in the body (4) and configured for selectively opening and closing the passage (10), the shut-off device (12) comprising a main seat (20), a main closing element (18) configured for cooperating with the main seat (20), forming a channel (18.1, 18.2) extending there through and a pilot seat (24), a pilot closing element (22) housed in the main closing element (18) and configured for cooperating with the pilot seat (24);
- an actuating device (14) configured for moving the pilot closing element (22) away from the pilot seat (24) and open the passage (10) through the channel (18.1, 18.2) and, once a counter-pressure has built up downstream of the main closing element (18), move the main closing element (18) away from the main seat (20);
**characterized in that**
the main closing element (18) shows an outer cylindrical surface (18.3.1, 18.3.2) housed in a sliding fashion in at least one bore (34.2, 36.1) of the body (4), the outer cylindrical surface (18.3.1, 18.3.2) showing a least one longitudinal cut-out (18.4.1, 18.4.2) forming the passage (10) along the main closing element (18).

2. Valve according to claim 1, wherein the actuating device (14) comprises an elastic system through which an actuating force is transmitted and is configured for contacting also the main closing element (18) for moving said main closing element (18).

3. Valve according to claim 1, wherein the shut-off device (12) comprises a first compression spring (26) operatively mounted between the pilot closing element (22) and the main closing element (18), and a second compression spring (28) configured for biasing the main closing element (18) towards the main seat (20).

## Patentansprüche

1. Ventil (2) für ein Fluid, insbesondere für Druckgas, umfassend :
- einen Körper (4) mit einem Einlass (6), einem Auslass (8) und einem Durchgang (10), der den Einlass (6) und den Auslass (8) fluidisch miteinander verbindet;
- eine Absperrvorrichtung (12), die in dem Körper (4) aufgenommen ist und dazu eingerichtet ist, den Durchgang (10) wahlweise zu öffnen und zu schließen, wobei die Absperrvorrichtung (12) einen Hauptsitz (20), ein Hauptelement zum Schließen (18), das dazu eingerichtet ist, mit dem Hauptsitz (20) zusammenzuwirken, einen sich dadurch erstreckenden Kanal (18.1, 18.2) ausbildet und einen Pilotsitz (24) aufweist, wobei ein Pilot-Schließelement (22) in dem Hauptelement zum Schließen (18) aufgenommen und dazu eingerichtet ist, mit dem Pilotsitz (24) zusammenzuwirken;
- eine Betätigungsvorrichtung (14), die dazu eingerichtet ist, das Pilot-Schließelement (22) vom Pilotsitz (24) weg zu bewegen und den Durchgang (10) durch den Kanal (18.1, 18.2) zu öffnen und, nachdem sich stromabwärts von dem Hauptelement zum Schließen (18) ein Gegengegendruck aufgebaut hat, das Hauptelement zum Schließen (18) vom Hauptsitz (20) weg zu bewegen;
**dadurch gekennzeichnet, dass**
das Hauptelement zum Schließen (18) eine äußere zylindrische Oberfläche (18.3.1, 18.3.2) aufweist, die in mindestens einer Bohrung (34.2, 36.1) des Körpers (4) verschiebbar aufgenommen ist, wobei die äußere zylindrische Oberfläche (18.3.1, 18.3.2) mindestens eine längsverlaufende Ausnehmung (18.4.1, 18.4.2) aufweist, die den Durchgang (10) entlang dem Hauptelement zum Schließen (18) ausbildet.

2. Ventil nach Anspruch 1, wobei die Betätigungsvorrichtung (14) ein elastisches System umfasst, durch das eine Betätigungskraft übertragen wird, und dazu eingerichtet ist, auch mit dem Hauptelement zum Schließen (18) in Kontakt zu treten, um das Hauptelement zum Schließen (18) zu bewegen.

3. Ventil nach Anspruch 1, wobei die Absperrvorrichtung (12) eine erste Druckfeder (26) umfasst, die funktionsfähig zwischen dem Pilot-Schließelement (22) und dem Hauptelement zum Schließen (18) angeordnet ist, und eine zweite Druckfeder (28) aufweist, die dazu eingerichtet ist, das Hauptelement zum Schließen (18) in Richtung auf den Hauptsitz (20) zu beaufschlagen.

## Revendications

1. Soupape (2) pour un fluide, en particulier pour un gaz comprimé, comprenant :
- un corps (4) avec une entrée (6), une sortie (8) et un passage (10) interconnectant fluidiquement l'entrée (6) et la sortie (8);
- un dispositif d'obturation (12) logé dans le corps (4) et configuré pour ouvrir et fermer sélectivement le passage (10), le dispositif d'obturation (12) comprenant un siège principal (20), un élément de fermeture principal (18) configuré pour coopérer avec le siège principal (20), formant un canal (18.1, 18.2) s'étendant à travers celui-ci et un siège pilote (24), un élément de fermeture pilote (22) logé dans l'élément de fermeture principal (18) et configuré pour coopérer avec le siège pilote (24);
- un dispositif d'actionnement (14) configuré pour déplacer l'élément de fermeture pilote (22) à distance du siège pilote (24) et ouvrir le passage (10) au travers du canal (18.1, 18.2) et, une fois qu'une contre-pression s'est établie en aval de l'élément de fermeture principal (18), déplacer l'élément de fermeture principal (18) à distance du siège principal (20);
**caractérisée en ce que**
l'élément de fermeture principal (18) présente une surface cylindrique externe (18.3.1, 18.3.2) logée de manière coulissante dans au moins un alésage (34.2, 36.1) du corps (4), la surface cylindrique externe (18.3.1, 18.3.2) présentant au moins une découpe longitudinale (18.4.1, 18.4.2) formant le passage (10) le long de l'élément de fermeture principal (18).

2. Soupape selon la revendication 1, dans laquelle le dispositif d'actionnement (14) comprend un système élastique par lequel une force d'actionnement est transmise et est configuré pour venir également en contact avec l'élément de fermeture principal (18) afin de déplacer ledit élément de fermeture principal (18).

3. Soupape selon la revendication 1, dans laquelle le dispositif d'obturation (12) comprend un premier ressort de compression (26) monté de manière opérationnelle entre l'élément de fermeture pilote (22) et l'élément de fermeture principal (18), et un second ressort de compression (28) configuré pour solliciter l'élément de fermeture principal (18) vers le siège principal (20).
